# EUROPÄISCHE PATENTSCHRIFT

(11) **EP 2 142 831 B1**
(45) Veröffentlichungstag und Bekanntmachung des Hinweises auf die Patenterteilung: **29.09.2010**
(21) Anmeldenummer: 08736590.4
(22) Anmeldetag: 25.04.2008
(51) Int. Cl.: F16K 37/00, G05B 23/02

(54) **VERFAHREN ZUR ÜBERPRÜFUNG DER FUNKTIONSFÄHIGKEIT EINES STELLGERÄTES**
METHOD FOR MONITORING THE OPERABILITY OF AN ACTUATOR
PROCÉDÉ POUR VÉRIFIER LE BON FONCTIONNEMENT D'UN APPAREIL DE RÉGLAGE

(30) Priorität: 02.05.2007 DE 102007020597
(43) Veröffentlichungstag der Anmeldung: 13.01.2010
(73) Patentinhaber: Siemens Aktiengesellschaft, 80333 München (DE)
(72) Erfinder: GREIN, Nicolas, 76870 Kandel (DE); SCHNEIDER, Matthias, 76703 Kraichtal (DE)
(86) Internationale Anmeldenummer: PCT/EP2008/055104
(87) Internationale Veröffentlichungsnummer: WO 2008/135417

(56) Entgegenhaltungen:
- GB-A- 2 372 087
- US-A1- 2002 108 436
- US-A1- 2006 219 299
- US-A1- 2007 018 127

## Beschreibung

Die Erfindung betrifft ein Verfahren zur Überprüfung der Funktionsfähigkeit eines Stellgerätes, mit einem Stellventil, das über einen Stellantrieb mittels eines an dem Stellventil angreifenden Stellelements verstellbar ist, einem Positionsgeber, der die Ist-Position des Stellelements erfasst, und einem elektro-pneumatischen Stellungsregler, der in Abhängigkeit von der Ist-Position und einer Soll-Position eine pneumatische Stellgröße erzeugt, die dem Stellantrieb über ein aktiviertes und zur Entlüftung des Stellantriebs deaktivierbares Magnetventil zugeführt wird, wobei zur Durchführung eines Partial-Stroke-Tests das Stellelement kurzzeitig über einen Teil seines Stellweges bewegt und dabei die Stellbewegung erfasst wird und wobei zum Testen des Magnetventils dieses kurzzeitig deaktiviert wird, so dass sich das Stellelement nur über einen Teil seines Stellweges bewegt.

Ein solches Verfahren ist aus der US 2006/0219299 A1 bekannt. Bei dem bekannten Verfahren wird das Stellelement bzw. Stellventil im Rahmen eines Partial-Stroke-Tests mittels des Stellungsreglers aus der jeweils aktuellen Position über einen Teil seines Stellweges bewegt und anschließend wieder zurückbewegt. Die Stellungsänderung ist dabei so gering, dass der laufende Betrieb der Anlage, in der das Stellventil eingebaut ist, nicht unterbrochen werden muss und nur unwesentlich gestört wird. Während des Partial-Stroke-Tests wird die Stellbewegung erfasst und abgespeichert.

Zum Testen des Magnetventils wird dieses durch Unterbrechen seiner Spannungsversorgung kurzzeitig deaktiviert und dabei die Druckdifferenz zwischen der mit dem Stellungsregler verbundenen Seite und der mit dem Stellantrieb verbundenen Seite des Magnetventils überwacht. Der Test des Magnetventils wird als erfolgreich bewertet, wenn bei dem kurzzeitigen Deaktivieren des Magnetventils der Druck auf der Seite des Stellantriebs signifikant abfällt, während der von dem Stellungsregler gelieferte Druck weitgehend unverändert bleibt.

Der Erfindung liegt die Aufgabe zugrunde, die Überprüfung der Funktionsfähigkeit des Stellgerätes zu vereinfachen, wobei außerdem auf besondere Drucksensoren und entsprechende Pneumatikverbindungen zu dem Stellungsregler bzw. dem Magnetventil verzichtet werden kann.

Gemäß der Erfindung wird die Aufgabe dadurch gelöst, dass bei dem Verfahren der eingangs angegebenen Art der Partial-Stroke-Test und der Test des Magnetventils in einem einzigen Testablauf erfolgen, indem das Magnetventil deaktiviert wird, die Stellbewegung des Stellelements erfasst und auf Erreichen einer vorgegebenen Wegänderung überwacht wird und bei Erreichen der vorgegebenen Wegänderung das Magnetventil wieder aktiviert wird.

Beim Deaktivieren des Magnetventils wird der Stellantrieb pneumatisch von dem Stellungsregler getrennt und statt dessen entlüftet, so dass sich der Druck im Stellantrieb verringert und das Stellelement mit dem Stellventil, beispielsweise unter Einwirkung einer Feder in dem Stellantrieb, bewegt werden. Sobald das Stellelement eine vorgegebene Wegänderung ausgeführt hat, wird das Magnetventil wieder aktiviert und der Stellungsregler regelt das Stellelement über den Stellantrieb wieder in seine Ausgangsposition zurück. In dem einzigen Testablauf wird also die Funktionsfähigkeit aller Teile des Stellgerätes einschließlich des Magnetventils getestet.

In vorteilhafter Weise werden die während des Testablaufs erfasste Stellbewegung und/oder die erreichte Wegänderung abgespeichert. Alternativ oder ergänzend kann die vom Deaktivieren des Magnetventils bis zum Erreichen der vorgegebenen Wegänderung benötigte Zeit erfasst und abgespeichert werden. Außerdem können in vorteilhafter Weise nach dem Wiederaktivieren des Magnetventils die Stellbewegung des Stellelements bis zum Erreichen der Ausgangsposition und/oder die dazu benötigte Zeit erfasst und abgespeichert werden. Auf diese Weise wird der Testverlauf protokolliert und es kann festgestellt werden, ob das Stellgerät schnell genug auf Anforderungsänderungen reagiert.

Um im Fehlerfall, wenn beispielsweise das Stellelement hängenbleibt, eine dauerhafte Entlüftung des Stellantriebs zu verhindern, wird vorzugsweise die vom Deaktivieren des Magnetventils bis zum Erreichen der vorgegebenen Wegänderung benötigte Zeit auf Überschreiten einer vorgegebenen Zeitspanne überwacht, wobei beim Überschreiten der Zeitspanne das Magnetventil wieder aktiviert wird.

Der Test kann automatisch durch eine leittechnische Einrichtung außerhalb des Stellgerätes veranlasst, überwacht und ausgewertet werden. Die Rechenzykluszeiten leittechnischer Einrichtungen sind jedoch in der Regel zu lang, um den Ablauf eines Partial-Stroke-Tests unmittelbar zu Steuern und auszuwerten. Aus diesem Grund ist in vorteilhafter Weise vorgesehen, dass das Magnetventil von der leittechnischen Einrichtung eine Versorgungsspannung erhält, die in einem Notfall von der leittechnischen Einrichtung abschaltbar ist, und dass die Versorgungsspannung dem Magnetventil über einen steuerbaren Schalter zugeführt wird, der zum Starten und Beenden des Testablaufs von dem Stellungsregler geöffnet bzw. geschlossen wird. Im Notfall wird also durch Abschalten der Versorgungsspannung des Magnetventils das Stellelement mit dem Stellventil in eine Sicherheits- oder Notstellung bewegt, während der Test des Stellgerätes durch den im Vergleich zu der leittechnischen Einrichtung schneller arbeitenden Stellungsregler gesteuert und überwacht wird. Der Stellungsregler kann dazu von der leittechnischen Einrichtung zum Starten des Testablaufs getriggert werden und nach Testablauf die Testergebnisse an die leittechnische Einrichtung kommunizieren.

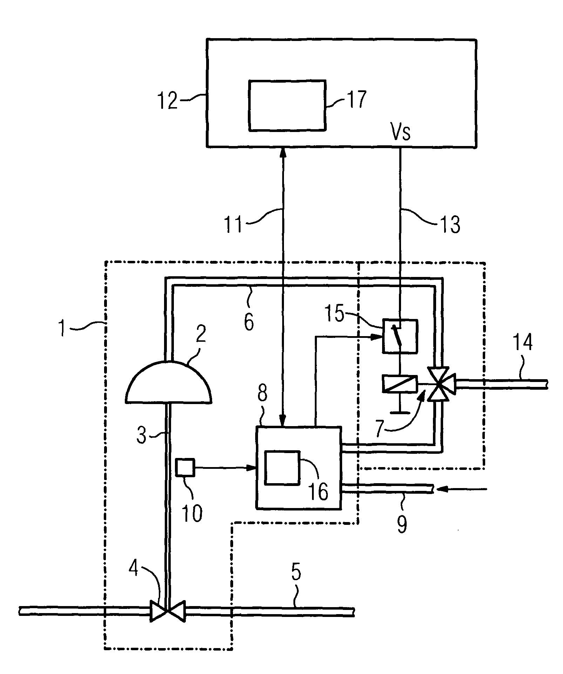

Zur weiteren Erläuterung der Erfindung wird im Folgenden auf die einzige Figur der Zeichnung Bezug genommen, die ein Ausführungsbeispiel eines Stellgerätes zur Durchführung des erfindungsgemäßen Verfahrens zeigt.

Das Stellgerät 1 enthält einen pneumatischen Stellantrieb 2, der über ein Stellelement 3, hier in Form einer Hubstange, ein Stellventil 4 betätigt und dabei den Fluidstrom in einer Rohrleitung 5 steuert. Der Stellantrieb 2 ist über eine pneumatische Leitung 6 mit einem darin angeordneten Magnetventil 7 an einem Stellungsregler 8 angeschlossen, der aus einer Versorgungsleitung 9 mit Druckluft versogt wird. Ein Positionsgeber 10 erfasst die Ist-Position des Stellelements 3 und führt sie dem Stellungsregler 8 zu, der in Abhängigkeit von der Ist-Position und einer vorgebbaren Soll-Position als Stellgröße einen variablen Druck in der Leitung 6 einstellt, um das Stellelement 3 mit dem Ventil 4 in die Soll-Position zu bewegen. Um die Soll-Position vorzugeben, ist der Stellungsregler 8 über eine Kommunikationsleitung 11 mit einer leittechnischen Einrichtung 12 verbunden.

Das Magnetventil 7, welches innerhalb des Stellgeräts 1 oder außerhalb davon angeordnet sein kann, ist als Dreiwegeventil ausgebildet und erhält von der leittechnischen Einrichtung 12 über eine Leitung 13 eine Versorgungsspannung Vs zugeführt.

Im Normalfall ist die Versorgungsspannung Vs eingeschaltet, so dass das Magnetventil 7 aktiviert ist und den Stellungsregler 8 mit dem Stellantrieb 2 pneumatisch verbindet. Im Notfall schaltet die leittechnische Einrichtung 12 die Versorgungsspannung Vs ab, so dass das dann deaktivierte Magnetventil 7 den Stellantrieb 2 von dem Stellungsregler 8 trennt und stattdessen über einen Magnetventilauslass 14 entlüftet. Der Stellantrieb 2 wird daraufhin drucklos und bewegt das Stellelement 3 mit dem Ventil 4, beispielsweise unter Einwirkung einer Feder in dem Stellantrieb 2, in eine Sicherheitsposition. Die Deaktivierung und spätere Wiederaktivierung des Magnetventils 7 kann zusätzlich auch an dem Stellgerät 1 selbst vorgenommen werden, indem ein steuerbarer Schalter 15 im Verlauf der Leitung 13 geöffnet bzw. wieder geschlossen wird.

Zur regelmäßigen Überprüfung der Funktionsfähigkeit des Stellgerätes 1 gibt die leittechnische Einrichtung 12 jedes Mal automatisch einen entsprechenden Befehl über die Kommunikationsleitung 11 an den Stellungsregler 8 ab. Dieser erzeugt daraufhin ein Steuersignal zum Öffnen des steuerbaren Schalters 15, so dass das Magnetventil 7 deaktiviert und als Folge dessen der Stellantrieb 2 entlüftet wird. Die daraufhin einsetzende Bewegung des Stellelements 3 wird von dem Positionsgeber 10 erfasst und in einem Speicher 16 des Stellungsreglers 8 abgespeichert. Der Stellungsregler 8 überwacht die Stellbewegung des Stellelements 3 auf Erreichen einer vorgegebenen parametrierbaren Wegänderung und erzeugt bei Erreichen der vorgegebenen Wegänderung ein Steuersignal zum Schließen des steuerbaren Schalters 15, so dass das Magnetventil 7 wieder aktiviert und die pneumatische Verbindung zwischen dem Stellungsregler 8 und dem Stellantrieb 2 wieder hergestellt wird. Der Stellungsregler 8 regelt jetzt das Stellelement 3 mit dem Stellventil 4 wieder in die Ausgangsposition vor dem Test zurück, wobei auch jetzt die Stellbewegung erfasst und abgespeichert wird.

Zusätzlich zur Stellbewegung werden auch die Zeiten erfasst, die das Stellelement 3 vom Deaktivieren des Magnetventils 7 bis zum Erreichen der vorgegebenen Wegänderung und anschließend vom Wiederaktivieren des Magnetventils 7 bis zum Erreichen der Ausgangsposition vor dem Test benötigt. Dabei wird die vom Deaktivieren des Magnetventils 7 bis zum Erreichen der vorgegebenen Wegänderung benötigte Zeit auf Überschreiten einer vorgegebenen, ebenfalls parametrierbaren, Zeitspanne überwacht und beim Überschreiten dieser Zeitspanne das Magnetventil 7 wieder aktiviert, um im Fehlerfall, beispielsweise bei einem Hängenbleiben des Stellelements, eine dauerhafte Entlüftung des Stellantriebs 2 zu verhindern. Über die Zeiterfassung bei der Rückbewegung des Stellelements 3 in die Ausgangsposition wird die Regelgeschwindigkeit des Stellgeräts 1 getestet.

Der Stellungsregler 8 übermittelt die Testergebnisse, also die abgespeicherten Stellbewegungen und zugehörigen Zeiten an die leittechnische Einrichtung 12. In einer Auswerteeinrichtung 17 der Einrichtung 12 können die während aufeinanderfolgender Tests des Stellgeräts 1 übermittelten Testergebnisse miteinander verglichen und auf trendhafte Veränderungen analysiert werden, um so z. B. einen erhöhten Verschleiß in dem Stellgerät 1 zu diagnostizieren.

## Patentansprüche

1. Verfahren zur Überprüfung der Funktionsfähigkeit eines Stellgerätes (1), mit einem Stellventil (4), das über einen Stellantrieb (2) mittels eines an dem Stellventil (2) angreifenden Stellelements (3) verstellbar ist, einem Positionsgeber (10), der die Ist-Position des Stellelements (3) erfasst, und einem elektro-pneumatischen Stellungsregler (8), der in Abhängigkeit von der Ist-Position und einer Soll-Position eine pneumatische Stellgröße erzeugt, die dem Stellantrieb (2) über ein aktiviertes und zur Entlüftung des Stellantriebs (2) deaktivierbares Magnetventil (7) zugeführt wird,
wobei zur Durchführung eines Partial-Stroke-Tests das Stellelement (3) kurzzeitig über einen Teil seines Stellweges bewegt und dabei die Stellbewegung erfasst wird und
wobei zum Testen des Magnetventils (7) dieses kurzzeitig deaktiviert wird, so dass sich das Stellelement (3) nur über einen Teil seines Stellweges bewegt,
**dadurch gekennzeichnet,**
**dass** der Partial-Stroke-Test und der Test des Magnetventils (7) in einem einzigen Testablauf erfolgen, indem das Magnetventil (7) deaktiviert wird, die Stellbewegung des Stellelements (3) erfasst und auf Erreichen einer vorgegebenen Wegänderung überwacht wird und bei Erreichen der vorgegebenen Wegänderung das Magnetventil (7) wieder aktiviert wird.

2. Verfahren nach Anspruch 1, **dadurch gekennzeichnet, dass** die während des Testablaufs erfasste Stellbewegung und/oder die erreichte Wegänderung abgespeichert werden.

3. Verfahren nach Anspruch 2, **dadurch gekennzeichnet, dass** die Stellbewegung nach dem Wiederaktivieren des Magnetventils (7) bis zum Erreichen der Ausgangsposition des Stellelements (3) vor dem Test erfasst und abgespeichert wird.

4. Verfahren nach einem der Ansprüche 1 bis 3, **dadurch gekennzeichnet, dass** die vom Deaktivieren des Magnetventils (7) bis zum Erreichen der vorgegebenen Wegänderung benötigte Zeit erfasst und abgespeichert wird.

5. Verfahren nach Anspruch 4, **dadurch gekennzeichnet, dass** die erfasste Zeit auf Überschreiten einer vorgegebenen Zeitspanne überwacht wird und dass beim Überschreiten der Zeitspanne das Magnetventil (7) wieder aktiviert wird.

6. Verfahren nach Anspruch 4 oder 5, **dadurch gekennzeichnet, dass** die vom Wiederaktivieren des Magnetventils (7) bis zum Erreichen der Ausgangsposition des Stellelements (3) vor dem Test benötigte Zeit erfasst und abgespeichert wird.

7. Verfahren nach einem der vorangehenden Ansprüche, **dadurch gekennzeichnet, dass** das Magnetventil (7) von einer leittechnischen Einrichtung (12) eine Versorgungsspannung (Vs) erhält, die in einem Notfall von der leittechnischen Einrichtung (12) abschaltbar ist, und dass die Versorgungsspannung (Vs) dem Magnetventil (7) über einen steuerbaren Schalter (15) zugeführt wird, der zum Starten und Beenden des Testablaufs von dem Stellungsregler (8) geöffnet bzw. geschlossen wird.

8. Verfahren nach Anspruch 7, **dadurch gekennzeichnet, dass** der Stellungsregler (8) von der leittechnischen Einrichtung (12) zum Starten des Testablaufs getriggert wird.

## Claims

1. Method for checking the operability of an actuator (1), with an actuating valve (4) which is able to be adjusted via an actuating drive (2) by means of an actuating element (3) engaging with the actuating valve (2), a position generator (10) which detects the actual position of the actuating element (3), and a electro-pneumatic position controller (8) which, as a function of the actual position and a target position, generates an actuating variable which is fed to the actuating drive (2) via an activated magnetic valve (7) able to be deactivated for venting the actuating drive (2), whereby, for carrying out a partial stroke test, the actuating element (3) is moved briefly over a part of its actuation path and the actuation movement is detected as it does so and whereby, for testing the magnetic valve (7), this valve is briefly deactivated so that the actuating element (3) only moves over a part of its actuating path,
**characterised in that**
the partial-stroke test and the test of the magnetic valve (7) are performed in a single test sequence by the magnetic valve (7) being deactivated, the actuation movement of the actuating element (3) being detected and monitored for reaching a predetermined path change, and the magnetic valve (7) being activated again when the predetermined path change is reached.

2. Method according to claim 1, **characterised in that** the actuation movement detected during the test sequence and/or the path change reached can be stored.

3. Method according to claim 2, **characterised in that** the actuation movement after the reactivation of the magnetic valve (7) up to reaching the initial position of the actuation element (3) is detected and stored before the test.

4. Method according to one of claims 1 to 3, **characterised in that** the time needed between deactivation of the magnetic valve (7) and reaching the predetermined path change is detected and stored.

5. Method according to claim 4, **characterised in that** the detected time is monitored for a predetermined period of time being exceeded and, if the period of time is exceeded, the magnetic valve (7) is activated again.

6. Method according to claim 4 or 5, **characterised in that** the time needed between reactivation of the magnetic valve (7) and reaching the initial position of the actuating element (3) before the test is detected and stored.

7. Method according to one of the previous claims, **characterised in that** the magnetic valve (7) receives a supply voltage (Vs) from a control device (12), which is able to be switched off in an emergency by the control device (12) and that the supply voltage (Vs) is fed to the magnetic valve (7) via a controllable switch (15) which is opened or closed respectively by the position controller (8) for starting and ending the test sequence (8).

8. The method according to claim 7, **characterised in that** the position controller (8) is triggered by the control device (12) for starting the test sequence.

## Revendications

1. Procédé de contrôle de l'aptitude à fonctionner d'un appareil ( 1 ) de réglage, comprenant une vanne ( 4 ) de réglage, qui peut être réglée par un entraînement ( 2 ) de réglage au moyen d'un élément ( 3 ) de réglage attaquant la vanne ( 2 ) de réglage, un indicateur ( 10 ) de position, qui relève la position réelle de l'élément ( 3 ) de réglage, et un régulateur ( 3 ) électropneumatique de position, qui produit, en fonction de la position réelle et d'une position de consigne, une grandeur pneumatique de réglage, qui est envoyée à l'entraînement ( 2 ) de réglage par une électrovanne ( 7 ) activée et pouvant être désactivée pour la mise à l'atmosphère de l'entraînement ( 2 ) de réglage,
dans lequel, pour effectuer un test partial stroke, on déplace brièvement l'élément ( 3 ) de réglage sur une partie de sa course de réglage et on détecte le mouvement de réglage et dans lequel, pour tester l'électrovanne ( 7 ), on la désactive brièvement, de manière à ce que l'élément ( 3 ) de réglage ne se déplace que sur une partie de sa course de réglage, **caractérisé**
**en ce que** l'on effectue le test partial stroke et le test de l'électrovanne ( 7 ) dans une opération unique de test en désactivant l'électrovanne ( 7 ), en détectant le mouvement de réglage de l'élément ( 3 ) de réglage et en contrôlant que l'on a atteint une modification de course prescrite et, lorsque l'on a atteint la modification de course prescrite, en réactivant l'électrovanne.

2. Procédé suivant la revendication 1, **caractérisé en ce que** l'on mémorise le déplacement de réglage détecté pendant l'opération de test et/ou la modification de course atteinte.

3. Procédé suivant la revendication 2, **caractérisé en ce que** l'on détecte et mémorise, avant le test, le déplacement de réglage après la réactivation de l'électrovanne ( 7 ), jusqu'à ce que la position initiale de l'élément ( 3 ) de réglage soit atteinte.

4. Procédé suivant l'une des revendications 1 à 3, **caractérisé en ce que** l'on détecte et mémorise, jusqu'à ce que la modification de course prescrite soit atteinte, le temps qu'il a fallu pour la désactivation de l'électrovanne ( 7 ).

5. Procédé suivant la revendication 4, **caractérisé en ce que** l'on contrôle le temps détecté pour savoir s'il dépasse un laps de temps prescrit et, en cas de dépassement, on réactive le laps de temps de l'électrovanne ( 7 ).

6. Procédé suivant la revendication 4 ou 5, **caractérisé en ce que** l'on détecte et mémorise le temps qu'il a fallu, avant le test, pour aller de la réactivation de l'électrovanne ( 7 ) jusqu'à ce que la position initiale de l'élément ( 3 ) de réglage soit atteinte.

7. Procédé suivant l'une des revendications précédentes, **caractérisé en ce que** l'électrovanne ( 7 ) reçoit, par un dispositif ( 12 ) de la technique conductrice, une tension ( Vs ) d'alimentation, qui peut être interrompue dans un cas d'urgence par le dispositif ( 12 ) de la technique conductrice, et **en ce que** la tension ( Vs ) d'alimentation est appliquée à l'électrovanne ( 7 ) par un interrupteur ( 15 ), qui peut être commandé et qui est ouvert ou fermé par le régulateur ( 8 ) de position, pour faire débuter l'opération de test ou pour y mettre fin.

8. Procédé suivant la revendication 7, **caractérisé en ce que** le régulateur ( 8 ) de position est déclenché par le dispositif ( 12 ) de la technique conductrice, pour faire débuter l'opération de test.
